# EUROPEAN PATENT APPLICATION

(11) **EP 3 285 149 A1**
(43) Date of publication of application: **21.02.2018**
(21) Application number: 15832677.7
(22) Date of filing: 17.08.2015
(51) Int. Cl.: G06F 3/041

(54) **TOUCH SCREEN AND TOUCH SENSITIVE DEVICE**

(30) Priority: 15.04.2015 CN 201510176473
(71) Applicant: BOE Technology Group Co., Ltd., Beijing 100015 (CN); Hefei BOE Optoelectronics Technology Co., Ltd., Hefei, Anhui 230012 (CN)
(72) Inventor: GU, Honggang, Beijing 100176 (CN); SHAO, Xianjie, Beijing 100176 (CN); JIANG, Qinghua, Beijing 100176 (CN); XIA, Long, Beijing 100176 (CN); LIU, Bo, Beijing 100176 (CN)
(74) Representative: Fuchs Patentanwälte Partnerschaft mbB
(86) International application number: PCT/CN2015/087233
(87) International publication number: WO 2016/165251

(57) **Abstract**

The present invention discloses a touch screen, which comprises a plurality of touch control electrode units and touch control electrode leads, wherein each of the touch control electrode units comprises one touch control driving electrode and M touch control sensing electrodes, and the touch control electrode leads comprise multiple touch control driving electrode leads and M touch control sensing electrode leads, each touch control driving electrode lead being correspondingly connected to each touch control driving electrode, and each of the M touch control sensing electrode leads being connected to one of the M touch control sensing electrodes in each of the touch control electrode units, wherein M is a positive integer greater than or equal to 5. Compared to the prior art, the touch screen according to the present invention has the advantages of effectively reducing the number of touch control driving electrodes while keeping the touch control precision unchanged, thereby effectively reducing the number of pins by 40%-50%; and improving touch control sensitivity with the same number of pins.

## Description

### TECHNICAL FIELD

The present invention relates to the field of display technologies, in particular to a touch screen and a touch control device.

### BACKGROUND OF THE INVENTION

Currently, many input devices of different types, such as mouse, push-buttons, touch panels, control sticks, touch screens, etc., can be applied to a computer system to perform operations. Touch screens have become more and more popular owing to their usability, multi-functionality of operation, continuously lowering price, and steadily increasing yield.

Touch screens can be divided into external touch screens and embedded touch screens. An external touch screen may have a panel with a touch function located in front of a display, and a touch surface covers a viewable area of a display area, thereby realizing touch control; while an embedded touch screen has a touch function integrated into a display panel, with or without a protection glass in the outside, and a user can operate by touching the screen with a finger.

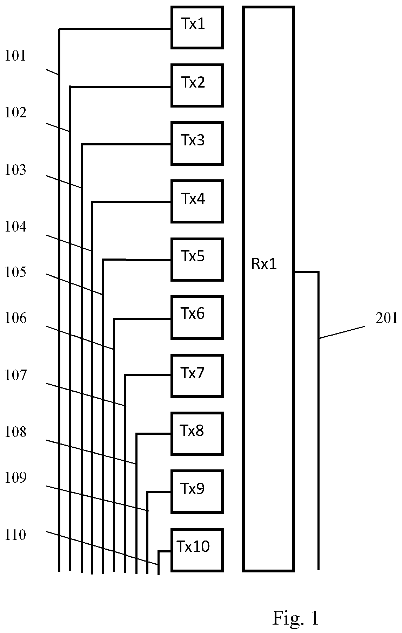

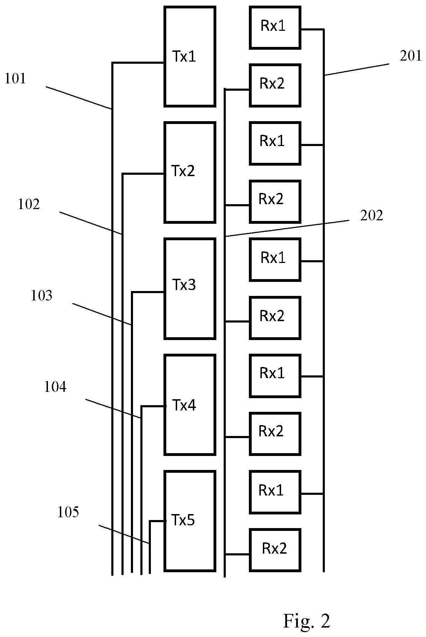

A touch control structure of the touch screen is formed by a substrate and a touch pattern that consists of touch control electrodes. The touch control electrodes include touch control driving electrodes and touch control sensing electrodes, and these touch control electrodes are connected to a touch control drive circuit via electrode leads and lead pins. In a conventional touch control electrode structure, as shown in Figs. 1 and 2, it is usual that multiple touch control driving electrodes Tx1-Tx10 correspond to one touch control sensing electrode Rx1 or that one touch control driving electrode Tx1 corresponds to two touch control sensing electrodes Rx1 and Rx2, thus there are relatively a larger number of touch control driving electrodes, which result in a larger number of leads and pins. Generally, a touch screen display of about 5 inches has 200-300 pins, and a screen of 7 inches even has more than 400 pins. Owing to the large number of touch control driving electrodes, more touch control driving electrode leads and more lead pins are needed for connecting them to the touch control drive circuit, which increases the difficulty of technology to some extent. Moreover, too many pins will increase the product cost, cause a reduction in the yield of binding between the touch control electrode leads and the touch control drive circuit, and may easily cause such problems as bad curing after the joint.

### SUMMARY OF THE INVENTION

An object of the present invention is to provide a touch screen and a touch control device that can solve the above-mentioned problems in the prior art.

The invention improves the conventional touch control electrode structure of the touch screen by changing a condition that one touch control sensing electrode corresponds to multiple touch control driving electrode in the conventional structure into a condition that one touch control driving electrode corresponds to multiple (e.g. five or more) touch sensing electrodes, thus significantly reducing the number of touch control driving electrodes, as a result, a total number of electrode leads and pins is reduced and the touch control precision is significantly improved.

The present invention provides a touch screen, which comprises a plurality of touch control electrode units and touch control electrode leads, each of the touch control electrode units comprises one touch control driving electrode and M touch control sensing electrodes, and the touch control electrode leads comprise multiple touch control driving electrode leads and M touch control sensing electrode leads, each touch control driving electrode lead being correspondingly connected to each touch control driving electrode, and each of the M touch control sensing electrode leads being connected to one of the M touch control sensing electrodes in each of the touch control electrode units, wherein M is a positive integer greater than or equal to 5.

Further, the present invention also provides a touch control device, comprising the above-mentioned touch screen according to the present invention. The touch control device may include, but is not limited to, any product or component having a display function, such as liquid crystal panel, electronic paper, OLED panel, liquid crystal television, liquid crystal display, digital photo frame, cell phone, tablet computer, etc.

Obviously, compared to the prior art, the touch screen and touch control device of the present invention have the following advantageous effects: (1) significantly reducing the numbers of touch control driving electrodes and electrode leads while keeping the touch control precision unchanged; (2) significantly increasing the touch control precision while keeping the numbers of touch control driving electrodes and electrode leads unchanged.

### BRIEF DESCRIPTION OF THE DRAWINGS

By means of the following detailed descriptions and figures, different aspects, characteristics and advantages of the present invention can be easily understood. In the figures:
Fig. 1 is a schematic drawing of a first touch control electrode structure of a touch screen according to the prior art;
Fig. 2 is a schematic drawing of a second touch control electrode structure of a touch screen according to the prior art; and
Fig. 3 is a schematic drawing of a touch control electrode structure of a touch screen according to an embodiment of the present invention.

It shall be noted that these figures are merely schematic and illustrative, and they are not necessarily drawn to scale.

### DETAILED DESCRIPTION OF THE EMBODIMENTS

The present invention will be described more completely in the text below with reference to the figures. The present preferred embodiments of the present invention are shown in the figures.

Fig. 1 is a schematic drawing of a first touch control electrode structure of a touch screen according to the prior art. As shown in Fig. 1, such touch control electrode structure has a group of (ten) touch control driving electrodes Tx1-Tx10 corresponding to one touch control sensing electrode Rx1, thus forming a touch control electrode unit (only one touch control electrode unit is shown in the figure), wherein each touch control driving electrode is individually connected via a single one touch control driving electrode lead, namely, 10 touch control driving electrodes Tx1-Tx10 are individually connected via 10 touch control driving electrode leads 101-110, respectively, while the touch control sensing electrode Rx1 in each touch control electrode unit is connected via one touch control sensing electrode lead 201. Generally, the touch control driving electrode leads 101-110 and the touch control sensing electrode lead 201 are respectively connected to a touch control drive circuit (not shown) via lead pins (not shown). In each touch control electrode unit, the correspondence between a group of touch control driving electrodes and one touch control sensing electrode means that each of the plurality of touch control driving electrodes in the group corresponds to one touch control sensing electrode so as to form touch control detection areas which have the same number as the touch control driving electrodes, and the touch control drive circuit determines a touch control position by detecting a capacitance change therein. The touch control electrodes as shown in Fig. 1 form 10 touch control detection areas. On the other hand, in the first touch control electrode structure of the prior art as shown in Fig. 1, the touch control driving electrodes Tx1-Tx10 need 10 touch control driving electrode leads 101-110 and 10 lead pins, and the touch control sensing electrode Rx1 needs one touch control sensing electrode lead 201 and one lead pin, so they together need 11 leads and 11 pins.

Fig. 2 is a schematic drawing of a second touch control electrode structure of a touch screen according to the prior art. Unlike Fig. 1, the touch control electrode structure shown in Fig. 2 has one touch control driving electrode corresponding to a group of (two) touch control sensing electrodes Rx1 and Rx2, thus forming a touch control electrode unit, wherein each touch control driving electrode is individually connected via a single one touch control driving electrode lead, namely, 5 touch control driving electrodes Tx1-Tx5 are individually connected via 5 touch control driving electrode leads 101-105, respectively, while the touch control sensing electrodes having the same positional sequence in each touch control electrode unit are connected in series via one and the same touch control sensing electrode lead, that is, as shown in Fig. 2, a first touch control sensing electrode Rx1 and a second touch control sensing electrode Rx2 of each touch control electrode unit are connected in series by touch control sensing electrode leads 201 and 202 respectively. In each touch control electrode unit, the correspondence between one touch control driving electrode and a group of touch control sensing electrodes means that one touch control driving electrode corresponds to multiple touch control sensing electrodes in the group so as to form multiple touch control detection areas, wherein a number of the touch control detection areas equals to the number of the touch control sensing electrodes. The touch control electrode structure as shown in Fig. 2 includes 5 touch control electrode units, thus forming 10 touch control detection areas. On the other hand, in the second touch control electrode structure of the prior art as shown in Fig. 2, the touch control driving electrodes Tx1-Tx5 need 5 touch control driving electrode leads 101-105 and 5 lead pins, and the touch control sensing electrodes Rx1-Rx2 need only two touch control sensing electrode leads 201-202 and two lead pins, so they together need 7 leads and 7 pins.

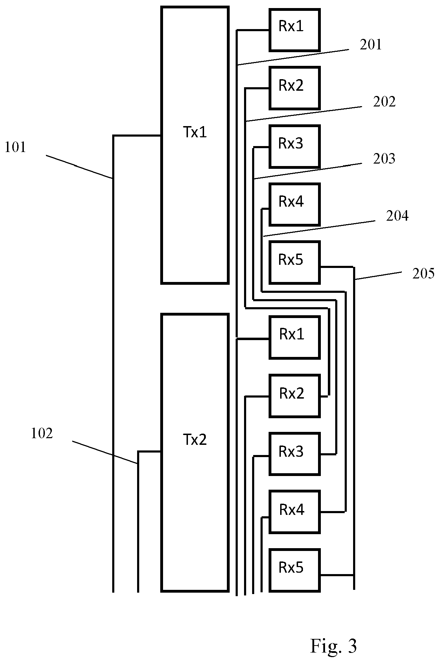

Fig. 3 is a schematic drawing of a touch control electrode structure of a touch screen according to an embodiment of the present invention. The touch screen according to an embodiment of the present invention comprises a plurality of touch control electrode units and a plurality of touch control electrode leads, each touch control electrode unit comprising one touch control driving electrode and M touch control sensing electrodes, wherein M is a positive integer greater than or equal to 5. As shown in Fig. 3, each touch control electrode unit comprises one touch control driving electrode Tx1 or Tx2 and 5 (i.e. M=5) touch control sensing electrodes Rx1-Rx5, which are the first to fifth touch control sensing electrodes Rx1-Rx5 according to the positional sequence, wherein the touch control driving electrode Tx1 (or Tx2) in different touch control electrode units is individually connected via a single one touch control driving electrode lead 101 (or 102), while the touch control sensing electrodes Rx1-Rx5 having the same positional sequence in each of the touch control electrode units are connected in series via one and the same touch control sensing electrode lead. As shown in Fig. 3, the touch control driving electrodes Tx1 and Tx2 in two different touch control electrode units are individually connected by two different touch control driving electrode leads 101 and 102, respectively, while the first to fifth touch control sensing electrodes Rx1-Rx5 having the same positional sequence in each of the touch control electrode units are connected in series via touch control sensing electrode leads 201-205. Such a way of connecting the touch control sensing electrodes according to the positional sequence can realize good touch control sensitivity in each touch control detection area.

Preferably, in each touch control electrode unit, one touch control driving electrode is arranged opposite M touch control sensing electrodes arranged side by side, so that at least a part of each of the M touch control sensing electrodes corresponds to a part of the touch control driving electrode so as to form a touch control detection area. In this case, each touch control electrode unit can form M touch control detection areas, and the touch control drive circuit determines the touch control position by detecting a capacitance change therein. The touch control electrode structure according to the present invention as shown in Fig. 3 has two touch control electrode units altogether, each including 5 touch control sensing electrodes and hence 5 touch control detection areas, thus the touch control electrode structure shown in Fig. 3 has 10 touch control detection areas altogether.

Of course, in the touch control electrode structure according to the present invention, the touch control sensing electrode lead may be arranged in other manner, for example, in each of the touch control electrode units, touch control sensing electrodes connected via the same touch control sensing electrode lead are not limited to having the same sequence of arrangement. In other words, generally speaking, in each of the touch control electrode units in the present invention, each touch control driving electrode lead is correspondingly connected to each touch control driving electrode, and each of the plurality of touch control sensing electrode leads is connected to one of the plurality of touch control sensing electrodes in each of the touch control electrode units.

The touch screen as shown in Fig. 3 may further comprise a touch control drive circuit (not shown), which is connected to the touch control electrode via a touch control electrode lead. Further, the touch screen may further comprise a lead pin (not shown), via which the touch control electrode lead is connected to the touch control drive circuit.

Now the number of pins in the touch control electrode structure as shown in Fig. 3 will be analyzed specifically. As mentioned above, 11 pins are needed in the first touch control electrode structure of the prior art as shown in Fig. 1, and 7 pins are needed in the second touch control electrode structure of the prior art as shown in Fig. 2. In the touch control electrode structure according to the present invention as shown in Fig. 3, the touch control driving electrode needs two touch control driving electrode leads 101-102 and two lead pins, while the touch control sensing electrode needs five touch control sensing electrode leads 201-205 and five lead pins, so 7 leads and 7 pins are needed altogether, which are the same as the those needed in the second touch control electrode structure of the prior art as shown in Fig. 2, and are less than those needed in the first touch control electrode structure of the prior art as shown in Fig. 1.

It shall be noted that Figs. 1-3 only show the case of one column of the touch control electrode structures, and each column of touch control electrode structures includes 10 rows of touch control driving electrodes or touch control sensing electrodes, namely, it includes 10 touch control detection areas. In fact, a touch screen may comprise multiple columns of such structures, each column having more rows of touch control driving electrodes or touch control sensing electrodes, namely, there are more touch control detection areas. In the example described below, each column has 20 rows (i.e. 20 touch control detection areas), and in each column, the number of pins needed by the first touch control electrode structure of the prior art as shown in Fig. 1 is: 20 (touch control driving electrode)+1 (touch control sensing electrode)=21; the number of pins needed by the second touch control electrode structure of the prior art as shown in Fig. 2 is: 10 (touch control driving electrode)+2 (touch control sensing electrode)=12; the number of pins needed by the touch control electrode structure according to the present invention as shown in Fig. 3 is: 4 (touch control driving electrode)+5 (touch control sensing electrode)=9. Further, assume that there are 10 columns of touch control electrode structures, then the first touch control electrode structure of Fig. 1 needs 21*10=210 pins, the second touch control electrode structure of Fig. 2 needs 12*10=120 pins, and the touch control electrode structure according to the present invention in Fig. 3 needs 9*10=90 pins. Obviously, compared to Figs. 1 and 2, the number of pins needed by the touch control electrode structure in Fig. 3 is significantly reduced.

According to the above analyses, the number of pins needed by the touch control electrode structure of Fig. 1 equals to the number of touch control driving electrodes or the number of touch control detection areas in each touch control electrode unit plus the number of the touch control sensing electrodes. Suppose that each column of touch control electrode structure has m touch control detection areas (or rows), then the touch control electrode structure of Fig. 1 needs m+1 pins, the touch control electrode structure of Fig. 2 needs m/2+2 pins, and the touch control electrode structure of Fig. 3 needs m/5+5 pins. Obviously, the larger the m, the more significant the reduction of the pins in the touch control electrode structure according to the present invention as shown in Fig. 3. Therefore, more rows and columns in the touch control electrode, i.e. more touch control detection areas, means a more significant reduction in the number of pins needed by the touch control electrode structure according to the present invention. Specifically, compared to the prior art, the touch control electrode structure of the present invention can effectively reduce the number of pins by 40%-50%.

Based on the above analyses, compared to the prior art, with the same number of touch control detection areas (i.e. the same touch precision), the numbers of leads and pins required by the touch control electrode structure according to the present invention are significantly reduced, thereby simplifying the manufacturing process. On the other hand, if the number of pins is kept unchanged, the touch control electrode structure according to the present invention can obviously form more touch control detection areas, thus significantly increasing touch control precision.

Preferably, the lead pins can be connected to the touch control drive circuit through a flexible printed circuit board. In this case, since the number of pins have been reduced significantly, the area of the flexible printed circuit board connected thereto is reduced, thus reducing production cost and technology difficulty; meanwhile, a yield of binding between the lead pins and the flexible printed circuit board can be increased and a yield of UV adhesive curing during surface joining can be increased.

Preferably, an electrode material in the touch control electrode unit may include ITO or IGZO. In addition, a material of the touch control electrode lead may include a metal or ITO.

In an embodiment according to the present invention, a touch control device is provided, which comprises the above-mentioned touch screen according to the present invention. Preferably, the touch control device may further comprise a display module. The touch control device may include, but is not limited to, any product or component having a display function, such as liquid crystal panel, electronic paper, OLED panel, liquid crystal television, liquid crystal display, digital photo frame, cell phone, tablet computer, etc.

While the specific embodiments of the present invention have been shown and described, those skilled in the art can make several changes and modifications in a wider aspect thereof without departing from the present invention, and the present invention can be applied to a self-capacitance or a mutual-capacitance touch control device, so all such changes and modifications shall fall into the scope of the appended claims, as fall into the actual spirit and scope of the present invention.

## Claims

1. A touch screen, which comprises a plurality of touch control electrode units and touch control electrode leads, **characterized in that** each of the touch control electrode units comprises one touch control driving electrode and M touch control sensing electrodes, and the touch control electrode leads comprise multiple touch control driving electrode leads and M touch control sensing electrode leads, each touch control driving electrode lead being correspondingly connected to each touch control driving electrode, and each of the M touch control sensing electrode leads being connected to one of the M touch control sensing electrodes in each of the touch control electrode units, wherein M is a positive integer greater than or equal to 5.

2. The touch screen according to claim 1, **characterized in that** in each touch control electrode unit, the touch control driving electrode is arranged opposite the M touch control sensing electrodes arranged side by side, so that at least a part of each of the M touch control sensing electrodes corresponds to a part of said touch control driving electrode so as to form a touch control detection area.

3. The touch screen according to claim 1 or 2, **characterized in that** each of said touch control electrode units includes 5 touch control sensing electrodes, which are a first, second, third, fourth and fifth touch control sensing electrodes according to a positional sequence, said touch control electrode leads include 5 touch control sensing electrode leads, which are a first, second, third, fourth and fifth touch control sensing electrode leads, the first touch control sensing electrode lead is connected to each first touch control sensing electrode in the plurality of touch control electrode units, the second touch control sensing electrode lead is connected to each second touch control sensing electrode in the plurality of touch control electrode units, the third touch control sensing electrode lead is connected to each third touch control sensing electrode in the plurality of touch control electrode units, the fourth touch control sensing electrode lead is connected to each fourth touch control sensing electrode in the plurality of touch control electrode units, the fifth touch control sensing electrode lead is connected to each fifth touch control sensing electrode in the plurality of touch control electrode units.

4. The touch screen according to claim 1 or 2, **characterized by** further comprising a touch control drive circuit, the touch control electrode leads being connected to said touch control drive circuit.

5. The touch screen according to claim 4, **characterized by** further comprising lead pins, the touch control electrode leads being connected to said touch control drive circuit via the lead pins.

6. The touch screen according to claim 5, **characterized in that** the lead pins are connected to the touch control drive circuit through a flexible printed circuit board.

7. The touch screen according to claim 1 or 2, **characterized in that** an electrode material in the touch control electrode unit includes ITO or IGZO.

8. The touch screen according to claim 1 or 2, **characterized in that** a material of the touch control electrode lead includes a metal or ITO.

9. A touch control device, **characterized by** comprising the touch screen according to any one of claims 1-8.

10. The touch control device according to claim 9, **characterized in that** it further comprising a display module.
